# EUROPEAN PATENT SPECIFICATION

(11) **EP 2 089 484 B1**
(45) Date of publication and mention of the grant of the patent: **26.01.2011**
(21) Application number: 07862600.9
(22) Date of filing: 05.12.2007
(51) Int. Cl.: C09D 133/06, C09D 201/00, C09D 179/00, C08K 5/16

(54) **WATER-BASED COATING COMPOSITION**
WASSERBASIERTE BESCHICHTUNGSZUSAMMENSETZUNG
COMPOSITION DE REVÊTEMENT À BASE D'EAU

(30) Priority: 08.12.2006 US 873826 P
(43) Date of publication of application: 19.08.2009
(73) Proprietor: E. I. Du Pont de Nemours and Company, Wilmington, DE 19898 (US)
(72) Inventor: CHERNYSHOV, Dmitry, 121614 Moscow (RU); WILKENHOENER, Uwe, 42107 Wuppertal (DE)
(74) Representative: DuPont Performance Coatings Biering/Blum/Kimpel
(86) International application number: PCT/US2007/025008
(87) International publication number: WO 2008/073273

(56) References cited:
- DE-A1- 2 531 802
- DATABASE CA [Online] CHEMICAL ABSTRACTS SERVICE, COLUMBUS, OHIO, US; XP002518920 accession no. 1996:404681 Database accession no. 125:60504 & JP 08 090508 A (MITSUI TOATSU CHEMICALS) 9 April 1996 (1996-04-09)

## Description

### BACKGROUND OF THE INVENTION

The invention relates to a water-based coating composition, which may particularly be effective for corrosion protection and underbody sealant coating in the automotive industry.

### DESCRIPTION OF RELATED ART

Water-based compositions and coating compounds containing a combination of various reactive polymers or polymer lattices and melamine resins are already known.

US 5,166,254, for example, accordingly describes a water-based composition containing a methylol (meth)acrylamide-based (meth)acrylate latex, an acrylate hydrosol and a water-soluble or water-dispersible alkylated melamine-formaldehyde resin as crosslinking agent. These compositions are used as clearcoat materials or pigmented coating materials, for example as colour-imparting base coats or primers, in vehicle coating.

US 6,406,536 furthermore describes additives for cement applications, the additives comprising melamine resin, modified starch, cellulose ethers and an acrylate, styrene or butadiene latex, Melamine resin, starch and cellulose ether are here premixed by adding to the cement composition, while the acrylate, styrene or butadiene latex are separately added to the cement composition directly before processing.

US 5,137,067 furthermore describes a water-based composition which is used for coating heat exchanger cooling fins. The composition contains a vinyl chloride latex, an aqueous dispersion of a high molecular weight epoxy resin and a melamine resin as crosslinking agent for the epoxy resin.

US 4,649,170 describes a water-based stone impact-resistant underbody sealant based on an acrylate latex and a carbodiimide crosslinking agent.

DE 25 31 802 discloses aqueous coating compositions comprising a an aqueous latex of an styrene containing acrylic copolymer, a solution of an acrylic copolymer prepared by radical solution polymerization in an organic solvent and a water-dilutable melamine resin. The aqueous coating compositions have improved blister and stain resistance.

Also, JP 08090508 describes adhesive compositions for butt-joined panels containing acrylic resin emulsions, synthetic rubber latex, aqueous polyvinyl alcohol solution and/or aminoplasts. Wood panels are coated with the acrylic resin emulsion and are then hot pressed with butt-joined panel precoated with acrylic resin emulsion, modified rubber and starch.

It is furthermore known, in the interior coating of vehicle bodies, in particular bus bodies, for example, to apply an interlayer onto the precoated body, in particular the floor of the body. The vehicle body can be precoated for example with a primer, for example a CED layer (CED = cathodic electro-dipcoating). An adhesive may then be applied to the interlayer and suitable flooring sheets, on which for example in turn vehicle seats may be fitted, or other interior coverings can then stuck onto the adhesive layer. The crucial requirement placed on this multilayer structure is the adhesion between the different layers, i.e. the adhesion between the pre-coated vehicle body and the interlayer on the one hand and the adhesion between the interlayer and the adhesive layer on the other hand. However, known coatings of this kind, for example based on epoxide/polyamine systems, still always exhibit inadequate adhesion in the overall structure, i.e. in particular inadequate adhesion of the interlayer to the pre-coated vehicle body and also to the adhesive layer.

For reasons of efficiency, there is a desire in the automotive industry to use the same coating composition for different applications, for example in coating buses or similar vehicles. For example, it is desirable to use the same coating composition for such relatively thick coatings, such as the above-mentioned interlayer and the underbody sealant layer.

Naturally, only those coating compositions which then also completely satisfy the requirements for each different application may be used.

However, such coating compositions have not hitherto been known from the prior art.

There is accordingly a requirement for coating compositions which can not only act as an interlayer in vehicle interior coating and exhibit excellent interlayer adhesion, even after exposure to extreme conditions, for example exposure to moist heat, to a pre-coated vehicle body, for example pre-coated with a CED layer, and to an adhesive layer, but can also be used as an underbody sealant coating with very good stone impact resistance and as a corrosion protective coating with excellent corrosion resistance. These coating compositions should additionally cure well in elevated film thicknesses at temperatures as low as room temperature or under forced conditions at temperatures of up to 80°C.

### SUMMERY OF THE INVENTION

The invention relates to a water-based coating composition, for simultaneous use as an underbody sealant and in vehicle coating particularly the interior coating of vehicle bodies, comprising:
A) at least one aqueous (meth)acrylate latex,
B) at least one aqueous polymer latex, selected from the group consisting of polydiene latex, polydiene copolymer latex, polystyrene latex, nitrile latex and mixtures thereof, and
C) at least one amino resin.

The water-based coating composition preferably comprises 5-40 wt.% of component A), 5-30 wt.% of component B) and 1-20 wt.% of component C), particularly preferably 10-25 wt.% of component A), 5-20 wt.% of component B) and 3-12 wt.% of component C), relative to the entire coating composition and wherein the wt.% relate to the resin solids content of components A), B) and C).

### DETAILED DESCRIPTION OF THE EMBODIMENTS

The invention will be explained in greater detail below.

It will be appreciated that certain features of the invention which are, for clarity, described above and below in the context of separate embodiments may also be provided in combination in a single embodiment. Conversely, various features of the invention that are, for brevity, described in the context of a single embodiment may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both preceded by the word "about". Thus, slight variations above and below the stated ranges can be used to achieve substantially the same results as values within the ranges. Moreover, In the disclosure of these ranges, a continuous range Is intended, covering every value between the minimum and maximum values, including the minimum and maximum end points of the range.

By "aqueous polymer latex" and accordingly "aqueous (meth)acrylic latex", it is meant water-dispersed emulsion polymer, i.e. water-dispersed polymer particles prepared by emulsion polymerizing free-radically polymerizable olefinically unsaturated monomers in the aqueous phase.

The term (meth)acrylic as used here and hereinafter should be taken to mean methacrylic and/or acrylic and wt.% should be taken to mean weight percentage.

Unless stated otherwise, all molecular weights (both number and weight average molecular weight) referred to herein are determined by GPC (gel permeation chromatography) using polystyrene as the standard.

Water-based coating compositions are coating compositions, wherein water is used as solvent or thinner when preparing and/or applying the coating composition. Usually, water-based coating compositions contain 30 to 90% by weight of water, based on the total amount of the coating composition and optionally, up to 15 % by weight, preferably, below 10% by weight of organic solvents, based on the total amount of the coating composition.

The water-based coating composition will be described In greater detail below.

The water-based coating composition comprises binder components A, B and C. water and optionally conventional coating additives, organic solvents, fillers and/or pigments.

The water-based coating composition preferably contains 20-60 wt.% of components A, B and C (stated as resin solids content), 20-40 wt.% of water and 20-40 wt.% of conventional coating additives, organic solvents, fillers and/or pigments, wherein the weight percentages of the individual components add up to 100 wt.%.

Most preferred the water-based coating composition contains 30-60 wt.% of components A, B and C (stated as resin solids content), relative to the entire coating composition.

The aqueous lattices to be used according to the invention (components A and B) comprise, as already defined above, polymers or copolymers produced in the aqueous phase by means of emulsion polymerisation of free-radically polymerisable olefinically unsaturated monomers.

Generally the aqueous lattices can be produced by a single-stage or multistage emulsion polymerization, i.e. the olefinically unsaturated monomers to be free-radically polymerized are polymerized under conventional conditions known to the person skilled in the art of a free-radical polymerization performed in an aqueous emulsion, i.e. using for example one or more emulsifiers and with the addition of one or more initiators which are thermally dissociable into free radicals. They may, for example, also be synthesised by the core-shell method.

The emulsifier(s) is/are used in a conventional total quantity of, for example, 0.1 to 3 wt.%, relative to the sum of the weight of monomers. Examples of usable emulsifiers are the conventional cationic, anionic and nonionic emulsifiers usable in the context of emulsion polymerization, such as, for example, acetyltrimethylammonium chloride, benzyldodecyldimethylammonium bromide, sodium dodecyl sulfate, sodium dodecylbenzenesulfonate, polyethylene glycol monolauryl ether. Care must be taken to ensure that cationic and anionic emulsifiers are not used with one another.

The initiator(s) which are thermally dissociable into free radicals (free-radical initiators) are used in a conventional total quantity of, for example, 0.02 to 2 wt.%, relative to the sum of the weight of monomers. The free-radical initiators are preferably water-soluble. Examples of usable free-radical initiators are hydrogen peroxide, peroxodisulfates such as sodium, potassium and ammonium peroxodisulfate, ammonium salts of 4,4'-azobls(4-cyanopentanoic acid), 2,2'-azobis(2-methyl-N-1,1-bis(hydroxymethyl)ethyl)propionamide, 2,2'-azobis(2-methyl-N-2-hydroxyethyl)propionamide as well as conventional redox initiator systems known to the person skilled in the art, such as hydrogen peroxide/ascorbic acid optionally In combination with catalytic metal salts such as iron, copper or chromium salts.

The (meth)acrylic lattices A) are produced by free-radical polymerization of (meth)acrylic monomers and optionally other olefinically unsaturated comonomers in the aqueous phase. Preferably the (meth)acrylic polymer comprises 30-100 % by weight of (meth)acrylic monomers and may contain 0-70 % by weight of non-(meth)acrylic olefinically polyunsaturated, free-radically polymerizable monomers.

Examples of free-radically polymerizable (meth)acrylic monomers to be used for preparing the (meth)acrylic lattices are those comprising functional groups or those being non-functionalized. They may also be used in combination.

Examples of free-radically polymerizable (meth)acryllc monomers without functional groups are (cyclo)alkyl (meth)acrylates. Examples of (cyclo)alkyl (meth)acrylates are (cyclo)alkyl (meth)acrylates with 1-12 carbon atoms, such as methyl (meth)acrylate, ethyl (meth)acrylate, propyl (meth)acrylate, butyl (meth)acrylate, isobutyl (meth)acrylate, tert.-butyl (meth)acrylate, hexyl (meth)acrylate, cyclohexyl (meth)acrylate, ethylhexyl (meth)acrylate, decyl (meth)acrylate, dodecyl (meth)acrylate, hexadecyl (meth)acrylate, lauryl (meth)acrylate and isobornyl (meth)acrylate.

Examples of olefinically unsaturated, free-radically polymerizable monomers with functional groups which may be used are in particular olefinically unsaturated, free-radically polymerizable monomers with at least one carboxyl group, such as, for example, (meth)acrylic, itaconic, crotonic, isocrotonic, maleic and fumaric acid, semi-esters of maleic and fumaric acid and carboxyalkyl esters of (meth)acrylic acid, for example, beta-carboxyethyl acrylate and adducts of hydroxyalkyl (meth)acrylates with carboxylic anhydrides, such as, for example, phthalic acid mono-2-(meth)acryloyloxyethyl ester. (Meth)acrylic acid is preferred.

Furthermore olefinically unsaturated (meth)acrylic monomers with at least one hydroxyl group (hydroxyalkyl (meth)acrylates) can be used, such as, for example, hydroxyethyl (meth)acrylate, and the hydroxypropyl (meth)acrylates, hydroxybutyl (meth)acrylates isomeric with regard to the position of the hydroxyl group, may be used. Also other olefinically unsaturated alcohols such as allyl alcohol can be used.

(Meth)acrylamide monomers can also be used.

The (meth)acrylate monomers can be used in combination with further olefinically unsaturated, free-radically polymerizable monomers such as monovinyl aromatic compounds such as styrene, vinyltoluene; vinyl ethers and vinyl esters, such as vinyl acetate and vinyl versatate. In particular styrene, vinyl acetate or (meth)acrylamides are used as comonomers.

Even if not preferred, olefinically polyunsaturated, free-radically polymerizable monomers may also be used.

The (meth)acrylic polymer may preferably contain carboxyl groups. The carboxyl groups of the (meth)acrylic polymer are preferably at least partially neutralized using conventional basic neutralizing agents, such as ammonia and in particular amines and/or aminoalcohols such as, for example, triethylamine, dimethylisopropylamine, dimethylethanolamine, dimethylisopropanolamine and 2-amino-2-methyl-1-propanol.

Preferably the (meth)acrylic polymer contains (cyclo)alkyl (meth)acrylic esters, at least one acid functional (meth)acrylic monomer and optionally vinyl aromatic monomers, vinyl acetate and/or (meth)acryl amide.

The (meth)acrylic lattices have a resin solids of e.g. 30-60 % by weight and a viscosity of 100 to 3000 mPas (test method according to DIN 53019). The (meth)acrylic polymers have weight average molecular weights (Mw) of, for example, 100,000 to 1,000, 000. Preferably (meth)acrylic polymers are used having a glass transition temperatures (Tg) of -10 to +30 °C (determined by Differential Scanning Calorimetry), particularly the aqueous (meth)acrylate latex A).

Suitable (meth)acrylic lattices are also commercially available. For example the following products can be used: UCAR™ Latex 120, 123, 163, 4358 (Union Carbide Corporation), Halwedrol® EMP-TN 6536/50W (Hüttenes-Albertus Lackrohstoff GmbH), Mowilith® DM-774 (Celanese), NeoCryl® XK-87 (DSM NeoResins). Dilexo® RA-4 (Dynea).

The polydiene, polydienecopolymer, nitrile and/or styrene lattices B) are also produced by free-radical polymerization of the respective olefinically unsaturated monomers.

Polydiene lattices are prepared by free-radical polymerization of diene monomers. Preferably used diene monomers are 1,3- and 1,4 dienes, such as 1,3-butadiene, 1,3-pentadiene, 1,4-pentadlene, 2-methyl-1,3-butadien (isoprene) and 2,3-dimethyl-1,3-butadlene. Diene monomers can be used alone or In combination. Especially preferred are lattices based on butadiene. The polydiene lattices substantially contain only diene monomers.

Polydiene copolymer lattices can also be used according to the present invention. Polydiene copolymers are polymers prepared by free-radical polymerization of diene monomers and at least one other olefinically unsaturated monomer. These are, for example, lattices based on copolymers of diene monomers and vinyl aromatic monomers, such as styrene, copolymers of diene monomers and nitrile monomers, such as (meth)acrylonitrile, or terpolymers of diene monomers, vinyl aromatic monomers and nitrile monomers.

The polydiene copolymers may also contain smaller amounts of olefinically unsaturated (meth)acrylic monomers, for example in amounts of up to 30 % by weight, based on the weight of the total copolymer. Examples of (meth)acrylic monomers are those described already above,

Furthermore nitrile lattices, e.g, based on acrylnitrile and/or methacrylnitrile and styrene lattices, based on styrene and/or methyl styrene, can be used as component B) according to the present invention. Nitrile lattices are lattices which substantially consist of olefinically unsaturated, nitrile monomers and styrene lattices are lattices which substantially consist of styrene monomers. However they may also contain small amounts of other olefinically unsaturated comonomers.

Preferably diene and/or diene copolymer lattices are used, for example, aqueous butadiene and/or butadiene copolymer lattices, in particular butadiene lattices and/or butadiene-styrene copolymer lattices. The lattices of component B) may be used individually or in combination with each other.

Polydiene, polydiene copolymer, nitrile and styrene lattices are commercially available. Products which can be used are for example Synthomer® 3023 DF (styrene-butadiene copolymer from Synthomer GmbH), Lipaton® SB 5521 (styrene-butadiene copolymer from Polymer Latex GmbH and DL 475 (from Dow Reichhold Specialty Latex LLC).

The lattices described as component B) preferably contain acid groups, in particular carboxyl groups. The acid groups are preferably at least partially neutralised In order to ensure the requisite compatibility with water. Otherwise, the stated lattices preferably contain no further functional groups. They generally have weight-average molar weights of 100,000 to 1,000,000. Lattices having a glass transition temperature (Tg) of -10 to +30 °C (determined by Differential Scanning Calorimetry) are preferably used.

If lattices with a higher glass transition temperature are used as component A) and B), this may result in incomplete film formation and insufficient elasticity.

The amino resin (component C) can be a water-dispersable amine resin. The aqueous coating composition of the present invention also contains at least one aminoplast resin. The aminoplast resins (component C) to be used according to the invention are usual aminoplast resins as used for example in the coatings industry, in particular those which are suitable for use in aqueous coating compositions. They are products produced using known industrial processes by condensing compounds bearing amino or amido groups, such as, dicyandiamide, urea, glycoluril, but in particular triazines such as melamine, benzoguanamine or + acetoguanamine with aldehydes, such as formaldehyde, paraformaldehyde, acetoaldehyde and benzaldehyde in the presence of alcohols. The preferred aldehyde is formaldehyde. Examples of alcohols are monohydric alcohols having 1- to 8 carbon atoms, such as methanol, ethanol, n-propanol, iso-propanol, iso-butanol, n-butanol, hexanol, 2-ethylbutanol and 2-ethylhexanol.

The condensation products may be partially or completely etherified.

The aminoplast resins can have different degrees of alkylolation and different degrees of etherification.

Melamine resins are preferably used as the aminoplast resins, in particular, those etherified to an extent of etherifying 3 to 6 alkylol groups out of 6 alkylol groups. Most preferred are completely etherified and, specifically, completely methanol-etherified types such as hexamethoxymethylmelamine. Monomeric as well as polymeric melamine resins can be used. The melamine resins can be water-dispersible melamine resins.

Examples of methyl-etherified melamine resins are the commercial products Cymel® 301, Cymel® 303, Cymel® 325, Cymel® 327, Cymel® 350 and Cymel® 370 from Cytec and Maprenal® MF 927 and Maprenal® MF 900 from Surface Specialties. Further examples are butanol- or isobutanol-etherified melamine resins such as, for example, the commercial products Setamin® US 138 from Akzo and Maprenal® MF 610 and Maprenal® MF 3615 from Surface Specialties or co-etherified melamine resins, which are both butanol- and methanol-etherified, such as, for example, Cymel® 54 from Cytec and Resimene® HM from Ineos Melamines.

According to the invention, components A and B are preferably used in a weight ratio of A:B of 20:80 to 80:20, more preferred in a weight ratio of 30:70 to 70:30 and in particular in a weight ratio of 40:60 to 60:40, wherein the ratio is based on the resin solids of components A and B. Particularly preferably, the at least one (meth)acrylic latex A) and at least one butadiene and/or butadiene/styrene latex B) are used in the stated ratios by weight.

The (meth)acrylic latex here contributes to achieving sufficient hardness of the coating, while using the polydiene latex, polydiene copolymer latex, nitrile latex and/or polystyrene latex ensures sufficient flexibility of the coating.

A combination of a (meth)acrylic latex and a butadiene latex and/or a styrene/butadiene latex is particularly preferably used, preferably in a weight ratio of (meth)acrylic latex to butadiene latex and/or styrene/butadiene latex of 30:70 to 70:30, in particular of 40:60 to 60:40.

Using the stated lattices outside the above-stated quantity ranges results in impairment of the above-stated properties of the resultant coating, such as flexibility, hardness and stone-chip resistance.

The proportion of the amino resin, in particular of the water-dispersible melamine resin preferably amounts to 1-20 wt.% (solids content), preferably 3-12 wt.% relative to the entire coating composition.

If the amino resin is used in quantities of below 1 wt.%, adequate adhesion of the functional layer to the underlying coating or to the adhesive layer is not achieved. If the amino resin is used in quantities of above 20 wt.%, this may result in insufficient drying as well as insufficient mechanical resistance, such as abrasion resistance.

Apart from the above-described binders A), B) and C) the coating composition forming the functional layer may contain further conventional binders, e.g. additional (meth)acrylate copolymers, polyurethane binders or polyester binders.

Apart from the above-described binders and water, the coating composition forming the functional layer may contain further conventional coating components, such as organic solvents, conventional coating additives, pigments and/or fillers.

The water-based coating compositions may contain the conventional coating additives in conventional quantities, for example, of 0.1 to 5 wt.%, relative to the solids content thereof. Examples are neutralizing agents, antifoaming agents, wetting agents, anticratering agents, thickeners and dispersant additives. Preferably the water-based coating compositions are free of curing catalysts for the curing reaction with aminoplast resins, in particular they are free of acid catalysts.

Examples of pigments are the conventional colored inorganic or organic pigments known to the person skilled in the art, such as, for example, titanium dioxide, iron oxide pigments, carbon black, azo pigments, phthalocyanine pigments, quinacridone pigments, pyrrolopyrrole pigments, perylene pigments.

The water-based coating compositions may contain conventional coating solvents, for example, in a proportion of preferably less than 15 wt.%, particularly preferably of less than 5 wt.%. These are conventional coating solvents, which may originate, for example, from the production of the binders or are added separately.

The water-based coating compositions have solids contents of, for example 30 to 80 wt.%, preferably of 50 to 70 wt.%.

Preferably the water-based coating compositions are used as two-component compositions, wherein one component comprises the binder components A) and the other component comprises the aminoplast resin B).

Further conventional coating components, such as organic solvents, conventional coating additives, pigments and/or fillers may be contained in one of the two components or in both of the two components. Preparing and storing the entire water-based coating composition in only one components may lead to stability problems of the coating composition.

The water-based coating compositions are conventionally applied onto substrates, in particular metal substrates, such as vehicle bodies, which have optionally been pre-coated e.g. with a primer. These in particular comprise metals as are used for the production of vehicle bodies such as steel.

The substrate is preferably pre-coated with a primer, the primer in particular conventionally comprising a primer based on an electro-dipcoating, preferably a cathodically deposited electro-dipcoating. The water-based coating compositions may be applied by conventional methods. They are preferably applied by spraying (e.g. airless or airmix) to a dry film thickness of, for example, 100 to 4000 µm, in particular of 200 to 3000 µm.

The water-based coating compositions may be hardened at temperatures as low as room temperature or under forced conditions at temperatures of for example up to 80°C, for example within 60 to 300 minutes. Forced drying may proceed after flashing-off for approx. 10-30 minutes at room temperature. It was all the more surprising that the water-based coating composition should cure within reasonable times at temperatures of, for example, from 20 °C up to at most 80°C and yield coatings with very good mechanical resistance, hardness and elasticity.

The water-based coating compositions according to the invention are in particular advantageously usable as an underbody sealant coat in vehicle coating, as a corrosion protection coat or also in the interior coating of vehicles, such as buses or similar vehicles. The coating compositions may of course also be used for any desired other industrial purposes in which the above-described coating properties must be achieved, e.g. in coating trailers, rail road cars, freight cars and silos.

One embodiment of the invention consists in using the water-based coating compositions for vehicle interior coating, for example for buses, and, after hardening, providing an adhesive layer by way of further processing. The adhesive may here be applied in conventional manner, for example by means of cartridges. The adhesive may be applied over the entire surface or just a part thereof in specific areas of the coating. A two-component polyurethane adhesive is preferably used. These adhesives conventionally contain hydroxy-functional binders, in particular based on polyester polyols, polyether polyols, poly(meth)acrylate polyols and combinations thereof, and polyisocyanate curing agents. But one-component adhesives can also be used. Application of the adhesive here generally proceeds in a manner known to the person skilled in the art shortly before adhesive bonding, for example shortly before sticking down flooring sheets or other interior coverings, as are used for fitting out vehicles such as for example cars, buses and other transportation vehicles.

The water-based coating composition of the present invention can also be used as coating composition in all applications within the automotive and other industrial areas, where an excellent adhesion is required between a coating layer and an adhesive layer. The coating composition according to the invention exhibit extraordinarily good adhesion in a multilayer structure to a pre-coat layer, in particular a primer layer and extraordinarily good adhesion to an adhesive layer. It also exhibit extraordinarily good adhesion to metal substrates, such as steel, steel alloys and aluminium. The very good adhesion is also achieved after exposure to extreme conditions, in particular exposure to moist heat, for example at 100% relative atmospheric humidity and 40-60°C for 120 - 240 hours. Coatings made from the coating compositions according to the invention likewise exhibit excellent mechanical resistance, flexibility and hardness. They exhibit very good stone impact resistance and resistance to the effects of moisture. They may be hardened at temperatures as low as room temperature or under forced conditions at up to 80°C, without it being necessary to accept any reduction in quality with regard to coating properties. No stoving at elevated temperatures, of for example 100 to 140°C, is necessary.

One major advantage of the coating compositions according to the invention consists in its being possible to achieve several functions, for example in the context of vehicle coating, with one coating composition. The coating composition may be used as an underbody sealant and for interior coating of vehicle bodies, specifically for providing an intermediate coating which can accept adhesive bonds and which may also be used for decorative interior coating. The requirements for the particular use may here be met without any reduction in quality. This possible use increases the efficiency of the entire coating process.

The coating compositions according to the invention may, of course, also be put to other industrial uses. They also may be over-coated with further coating compositions, e.g. with pigmented or un-pigmented top coat coating compositions. They furthermore have the advantage of being in line with the more stringent environmental requirements as they are water-based and contain only small quantities of organic solvents. The following Examples are intended to illustrate the invention in greater detail.

### EXAMPLES

### Example 1

### Preparation of a water-based coating composition

A water-based coating composition according the invention was prepared by admixing the following ingredients:
2.0 % by weight of deionized water
33.0 % by weight of an aqueous (meth)acrylic latex (NeoCryl® XK-87, 51 % in water)
23.0 % by weight of an aqueous butadiene-styrene latex (Lipaton® SB5521, 50 % in water)
1.0 % by weight of a thickener (Latekoll® D)
9.0 % by weight of titanium dioxide (Ti-Pure® R-960)
3.0 % by weight of a filler (Talkum AT extra)
18.0 % by weight of a filler (Blancfixe® F)
1.0 % by weight of a dispersant additive (Disperbyk® 111)
2.0% by weight of N-methyl-pyrrolidone.
8.0 % by weight of water dispersible melamine resin (Cymel® 327, 90 % in isobutanol)

### Comparative Example 2

### Preparation of a comparative water-based coating composition

The same coating composition as described in example 1 has been prepared, except the paint formulation of comparative example 1 did not contain waterdispersible melamine resin.

The coating compositions of example 1 and 2 were airless sprayed-applied (250 · 10⁵ Pa (250 bar)) onto CED-coated, with Zn-phosphate pre-treated cold rolled steel panels in a dry film thickness of about 1000 µm (microns). After spraying the coated panels were air-dried for 15 minutes and afterwards baked for 60 min at 80 °C in a convection oven.

Two-pack polyurethane adhesive material has been applied on the hardened coating in a film thickness of 5 mm.

The coating has then been evaluated in accordance with P 65 47 021 norm of Daimler Chrysler (Haftungs- und Bruchbildbeurteilung von Scheiben-Klebstoffsystemen) assigned for measuring cohesive break of the two-component adhesive material after exposure to the critical environments.

Test conditions: The test panel has been stored in a 100% humidity environment at a temperature of 70°C for a time of 4 days. Afterwards, the test panel was immediately put in a freezing chamber at a temperature of - 25°C for 16h. After that, the test panel has been reconditioned for 24h at room temperature and subsequently investigated for adhesive/cohesive failure of the adhesive layer. This is done by first cutting the glue layer at the interface to the paint layer underneath followed by peeling off the glue layer starting from the cut.

The results of the investigations are summarized in Table 1.

**Table 1**

| Coating composition | *Cohesion break rating |
|---|---|
| Example 1 | 4-5 |
| Comparative Example 1 | 1 |

| | |
|---|---|
| *Rating index: 1 : 0% cohesion break (adhesive material detaches completely from the coating interface) 2 : 25% cohesion break 3 : 50% cohesion break 4 : 75% cohesion break 5 : 100% cohesion break (adhesive material breaks cohesively, entirely in itself, not at glue/coating interface) | |

The results given in Table 1 clearly show that the use of the comparative coating composition (without melamine resin) in the multilayer structure results in a complete detachment of the adhesive from the coating layer, whereas the use of the coating composition according to the invention (with melamine resin) in the multilayer structure results in a strong adhesion (non-detachment) between the adhesive and the coating layer.

### Comparative Example 2

A water-based coating composition was prepared by admixing the following ingredients:
3.0 % by weight of deionized water
55.0 % by weight of an aqueous (meth)acrylic latex (NeoCryl® XK-87, 51 % in water)
1.0 % by weight of a thickener (Latekoll® D)
9.0 % by weight of titanium dioxide (Ti-Pure® R-960)
3.0 % by weight of a filler (Talkum AT extra)
18.0 % by weight of a filler (Blancfixe® F)
1.0 % by weight of a dispersant additive (Disperbyk® 111)
2.0 % by weight of N-methyl-pyrrolidone.
8.0 % by weight of water dispersible melamine resin (Cymel® 327, 90 % in isobutanol)

### Comparative Example 3

A water-based coating composition was prepared by admixing the following ingredients:
2.0 % by weight of deionized water
56.0 % by weight of an aqueous butadiene-styrene latex (Lipaton® SB5521, 50 % in water)
1.0 % by weight of a thickener (Latekoll® D)
9.0 % by weight of titanium dioxide (Ti-Pure R-960)
3.0 % by weight of a filler (Talkum AT extra)
18.0 % by weight of a filler (Blancfixe® F)
1.0 % by weight of a dispersant additive (Disperbyk® 111)
2.0% by weight of N-methyl-pyrrolidone.
8.0 % by weight of water dispersible melamine resin (Cymel® 327, 90% in isobutanol)

The coating compositions of example 1 and comparative examples 2 and 3 were airless sprayed-applied (250 · 10.5 Pa (250 bar)) onto CED-coated, with Zn-phosphate pre-treated cold rolled steel panels in a dry film thickness of about 1000 µm (microns). After spraying the coated panels were air-dried for 15 minutes and afterwards baked for 60 min at 80 °C in a convection oven.

Stone-chip performance of the coating systems was evaluated with VDA-stone-chip resistance test, "multischlag" method: 0.5 kg gravel charge; total of 500Kg of gravel (max.); pressure: 1.5 bar, Results of the test are summarized in Table 2.

**Table 2**

| Coating composition | Gravel weight (in kg) required until the coating system starts to break |
|---|---|
| Example 1 | 425 |
| Comparative Example 2 | 220 |
| Comparative Example 3 | 300 |

The Results of the stone-chip investigation of the three coating compositions have shown that the coating composition according to the invention provides remarkable improvement in stone-chip resistances compared with the coating compositions of comparative examples 2 and 3.

## Claims

1. Use of a water-based coating composition, comprising:
A) at least one aqueous (meth)acrylate latex,
B) at least one aqueous polymer latex, selected from the group consisting of polydiene latex, polydiene copolymer latex, polystyrene latex, nitrile latex and mixtures thereof, and
C) at least one amino resin,
in vehicle coating.

2. Use of a water-based coating composition of claim 1, wherein the water-based coating composition comprises 5-40 wt.% of component A), 5-30 wt.% of component B) and 1-20 wt.% of component C), relative to the entire coating composition, wherein the wt.% are based on the resin solids of components A), B) and C).

3. Use of a water-based coating composition of claim 2, wherein the water-based coating composition comprises 10-25 wt.% of component A), 5-20 wt.% of component B) and 3-12 wt.% of component C), relative to the entire coating composition, wherein the wt.% are based on the resin solids of components A), B) and C).

4. Use of a water-based coating composition of any one of claims 1 to 3, wherein the amino resin C) is a water-dispersible amino resin.

5. Use of a water-based coating composition of any one of claims 1 to 4, wherein the amino resin C) is a water-dispersible melamine resin.

6. Use of a water-based coating composition of any one of claims 1 to 5, wherein component B) comprises at least one aqueous butadiene and/or butadiene copolymer latex.

7. Use of a water-based coating composition of any one of claims 1 to 6, wherein the at least one aqueous (meth)acrylate latex A) has a glass transition temperature Tg of -10 to +30 °C.

8. Use of a water-based coating composition of any one of claims 1 to 7, wherein the at least one aqueous polymer latex B) has a glass transition temperature Tg of -10 to +30 °C.

## Patentansprüche

1. Verwendung einer Beschichtungszusammensetzung auf Wasserbasis, umfassend:
A) mindestens einen wässrigen (Meth)acrylat-Latex,
B) mindestens einen wässrigen Polymerlatex ausgewählt aus der Gruppe bestehend aus Polydien-Latex, Polydien-Copolymer-Latex, Polystyrol-Latex, Nitril-Latex und Mischungen davon und
C) mindestens ein Aminoharz,
in einer Fahrzeuglackierung.

2. Verwendung einer Beschichtungszusammensetzung auf Wasserbasis nach Anspruch 1, wobei die Beschichtungszusammensetzung auf Wasserbasis 5-40 Gew.-% der Komponente A), 5-30 Gew.-% der Komponente B) und 1-20 Gew.-% der Komponente C) mit Bezug auf die gesamte Beschichtungszusammensetzung umfasst, wobei die Gewichtsprozentsätze auf die Harzfeststoffe der Komponenten A), B) und C) bezogen sind.

3. Verwendung einer Beschichtungszusammensetzung auf Wasserbasis nach Anspruch 2, wobei die Beschichtungszusammensetzung auf Wasserbasis 10-25 Gew.-% der Komponente A), 5-20 Gew.-% der Komponente B) und 3-12 Gew.-% der Komponente C) mit Bezug auf die gesamte Beschichtungszusammensetzung umfasst, wobei die Gewichtsprozentsätze auf die Harzfeststoffe der Komponenten A), B) und C) bezogen sind.

4. Verwendung einer Beschichtungszusammensetzung auf Wasserbasis nach einem der Ansprüche 1 bis 3, wobei das Aminoharz C) ein wasserdispergierbares Aminoharz ist.

5. Verwendung einer Beschichtungszusammensetzung auf Wasserbasis nach einem der Ansprüche 1 bis 4, wobei das Aminoharz C) ein wasserdispergierbares Melaminharz ist.

6. Verwendung einer Beschichtungszusammensetzung auf Wasserbasis nach einem der Ansprüche 1 bis 5, wobei die Komponente B mindestens ein wässriges Butadien und/oder Butadien-Copolymerlatex umfasst.

7. Verwendung einer Beschichtungszusammensetzung auf Wasserbasis nach einem der Ansprüche 1 bis 6, wobei der mindestens eine wässrige (Meth)acrylat-Latex A) eine Glasübergangstemperatur Tg von -10 bis +30 °C aufweist.

8. Verwendung einer Beschichtungszusammensetzung auf Wasserbasis nach einem der Ansprüche 1 bis 7, wobei der mindestens eine wässrige Polymer-Latex B) eine Glasübergangstemperatur Tg von -10 bis +30 °C aufweist.

## Revendications

1. Utilisation d'une composition de revêtement à base aqueuse, comprenant:
A) au moins un latex de (méth)acrylate aqueux,
B) au moins un latex de polymère aqueux, choisi dans le groupe constitué d'un latex de polydiène, d'un latex de copolymère de polydiène, d'un latex de polystyrène, d'un latex de nitrile et de leurs mélanges, et
C) au moins une résine amino,
pour le revêtement de véhicules.

2. Utilisation d'une composition de revêtement à base aqueuse selon la revendication 1, dans laquelle la composition de revêtement à base aqueuse comprend 5-40% en poids de composant A), 5-30% en poids de composant B) et 1-20% en poids de composant C), par rapport à la composition de revêtement entière, dans laquelle les pourcentages en poids sont basés sur les matières solides de résine des composants A), B) et C).

3. Utilisation d'une composition de revêtement à base aqueuse selon la revendication 2, dans laquelle la composition de revêtement à base aqueuse comprend 10-25% en poids de composant A), 5-20% en poids de composant B) et 3-12% en poids de composant C), par rapport à la composition de revêtement entière, dans laquelle les pourcentages en poids sont basés sur les matières solides de résine des composants A), B) et C).

4. Utilisation d'une composition de revêtement à base aqueuse selon l'une quelconque des revendications 1 à 3, dans laquelle la résine amino C) est une résine amino dispersible dans l'eau.

5. Utilisation d'une composition de revêtement à base aqueuse selon l'une quelconque des revendications 1 à 4, dans laquelle la résine amino C) est une résine de mélamine dispersible dans l'eau.

6. Utilisation d'une composition de revêtement à base aqueuse selon l'une quelconque des revendications 1 à 5, dans laquelle le composant B) comprend au moins un latex de copolymère de butadiène et/ou latex de butadiène aqueux.

7. Utilisation d'une composition de revêtement à base aqueuse selon l'une quelconque des revendications 1 à 6, dans laquelle ledit au moins un latex de (méth)acrylate aqueux A) a une température de transition vitreuse Tg de -10 à +30°C.

8. Utilisation d'une composition de revêtement à base aqueuse selon l'une quelconque des revendications 1 à 7, dans laquelle ledit au moins un latex de polymère aqueux B) a une température de transition vitreuse Tg de -10 à +30°C.
